Europäisches Patentamt

European Patent Office

Office européen des brevets

(19)

(11) Publication number: **0 047 189**
**B1**

(12) **EUROPEAN PATENT SPECIFICATION**

(45) Date of publication of patent specification: **31.07.85**

(51) Int. Cl.⁴: **G 01 N 1/28** // G01N33/48

(21) Application number: **81304095.3**

(22) Date of filing: **08.09.81**

(54) **Device for spreading monolayered films.**

(30) Priority: **08.09.80 US 185020**
**12.02.81 US 234011**

(43) Date of publication of application:
**10.03.82 Bulletin 82/10**

(45) Publication of the grant of the patent:
**31.07.85 Bulletin 85/31**

(84) Designated Contracting States:
**BE DE FR GB IT LU NL**

(56) References cited:
**FR-A- 830 429**
**FR-A-2 315 693**
**US-A-2 655 898**
**US-A-3 683 850**
**US-A-3 880 111**
**US-A-3 888 206**
**US-A-4 030 341**
**US-A-4 151 915**

(73) Proprietor: **Prevo, Donald L.**
**907 Linden Avenue**
**Winnetka Illinois 60093 (US)**

(72) Inventor: **Prevo, Donald L.**
**907 Linden Avenue**
**Winnetka Illinois 60093 (US)**

(74) Representative: **George, Roger David et al**
**Raworth, Moss & Cook 36 Sydenham Road**
**Croydon Surrey CR0 2EF (GB)**

Courier Press, Leamington Spa, England.

# Description

## Background of the Invention

The present invention relates generally to spreaders for forming monolayered films on slides for use in the microscopic examination of fluids. In particular, the invention is a portable device for uniformly smearing a cellular fluid on a microscope slide or the like without substantially altering the morphology of the components in the fluid.

It is estimated that the medical profession performs between 500 and 600 million veni-punctures annually. The drawn blood samples are routinely examined by microscopy so that individual cells can be observed and abnormal cells identified. The cells, when distributed in a single layer on a slide and treated with a stain, can be counted to provide an index with which to diagnose the condition of the patient.

An elementary method of preparing a slide film for microscopic examination is to place a small quantity of a fluid, such as blood, on a slide. If a thin layer is desired, a second slide is placed over the first so that the fluid is dispersed between the two slides by drawing the slides together. The drawing action of this manual smear technique can produce an inconsistent distribution of cells with considerable cell overlapping and render a cell count imprecise. Cells may also be mechanically stretched and deformed, thus making a proper evaluation of cell morphology difficult.

Alternatively, the second slide can be held at an angle with respect to the first slide and drawn across the upper surface of the latter. A constant angle between the slides must be maintained during the drawing motion; the angle is critical to the smearing of a uniform film, but such precision is difficult to attain. As a result, smears produced by this method are often streaked and unevenly distributed.

Rather than drawing the slides together, the slides can be centrifuged to evenly distribute the fluid. In this manner, the mechanical deformation of cells is minimized. Centrifugation, however, requires expensive equipment and once the centrifuge apparatus is positioned and balanced, it cannot be moved conveniently so the technique must be performed at a single location.

Thus, the need exists for a device for preparing a fluid sample for microscopic examination wherein a uniform distribution of cells is achieved and cell deformation is minimized. It is also advantageous to have an inexpensive, portable device. The present invention is directed to the fulfillment of these needs.

The applicant is aware of the following U.S. patents:

U.S.—A—3,880,111 to Levine et al.;
U.S.—A—3,888,206 to Faulkner; and
U.S.—A—4,151,915 to Levine et al.;

The '111 patent to Levine et al. discloses an automatic device for preparing blood smears. A glass spreader is first pushed mechanically towards a drop of blood located at one end of a slide. After the spreader contacts the blood, a sufficient dwell time is allowed to permit the blood to diffuse along the lateral edges of the spreader. The spreader is then pulled in the reverse direction away from the blood sample at a predetermined speed. The spreader of Levine et al. thus advances to a predetermined point on the slide and then retracts to its original position; the spreader of the present invention, on the other hand, pushes the fluid across the slide. In addition, the device of the present invention is a simple, portable device that is operated manually. Levine et al. discloses a relatively complex, electrically operated device.

One major disadvantage of the invention of the '111 patent to Levine et al. is the problem of motor vibration which can produce a chattering on the smear. The '206 patent to Faulkner highlights this problem since Faulkner merely improves the aforementioned device of Levine et al. by adding a linkage assembly with shock absorbing means to dampen the vibrations and chatter which result during operation of the device.

The '915 patent to Levine et al, discloses another mechanical device for smearing a liquid on a slide. As with the previously described devices, the spreader is advanced to a predetermined point on the slide and then is retracted to its original position. The device is manually operated, but is still complex when compared to the construction and use of the present invention.

None of these patents show, or even contemplate a simple hand-held device for smearing uniform monolayers of a fluid.

The following patent specifications were cited in the European Search Report:

U.S.—A—2,655,898 discloses a base for supporting a slide and a hand held spreader but provides no means for maintaining the spreader at a good angle to achieve spreading, and likewise provides no means for maintaining the spreader element a proper distance from the surface of the slide.

U.S.—A—4,030,341 discloses another hand held device having the same deficiencies as those disclosed in U.S.—A—2,655,898. In this one, a transverse groove communicates with a source of blood through an aperture.

U.S.—A—3,683,850 discloses a device where a slide is placed on a carrier and the carrier moved into a housing where a spreader or applicator contacts the surface of the slide to spread the specimen. It is not a hand held device.

In addition FR—A—830429, FR—A—2,315,693, and U.S.—A—4,027,623 were cited in the Search Report.

It is therefore, the principal object of this invention to provide an improved device for the preparation of monolayered films which are uniform and suitable for use in microscopic analyses.

A further object of this invention is to provide a novel spreader for the preparation of monolayered films which is relatively economical and which can be disposed of after use, thereby avoiding any problems of contamination of specimens.

According to the invention there is provided a spreader for forming a single-cell-layered film on a microscope slide from a fluid placed on the slide, said slide being held by a supporting base surface characterized in that said spreader comprises:

(a) a support having an upper surface and a lower surface;

(b) a bar extending in a direction transverse to the slide and downwardly along said lower surface of said support, having a first sloped anterior surface, a second sloped posterior surface and a flat section interposed between the lower ends of said first and second sloped surfaces said sloped surfaces extending upwardly toward the lower surface of said support from said flat section, said flat section and sloped surfaces extending in said transverse direction; and

(c) means extending downwardly from said lower surface of said support along either end of said bar and slightly below said bar to engage said slide and to slightly space the flat section of said bar parallel to the slide on which the monolayered film is to be formed.

Other objects and advantages will be apparent from the following detailed description made with reference to the accompanying drawings.

Brief Description of the Drawings

Figure 1 is a top view of one embodiment of the invention;

Figure 2 is a side view taken along the line 2—2 of Figure 1;

Figure 3 is an end view taken along line 3—3 of Figure 2;

Figure 4 is a partial side view of the invention illustrating the interaction of the spreader and the ramps of the base;

Figure 5 is a sectional view taken along the line 5—5 of Figure 1;

Figure 6 is a sectional view of a second embodiment taken along the line 6—6 of Figure 1;

Figure 7 is a top view of a third embodiment of the spreader; and

Figure 8 is a sectional view taken along the line 8—8 of Figure 7.

Detailed Description

As illustrated in the drawings, the apparatus of the invention comprises a spreader 10 and a base, such as designated by reference numeral 12, which cooperates with the spreader. Both the spreader 10 and base 12 may be molded from a material of a kind that will flow when subjected to heat and pressure, and which is rigid when cooled, such as a thermoplastic. In addition, the base 12 can be constructed of any other durable material. The base is reuseable, while the spreader is disposable. Use of the device of the invention permits the uniform application of any fluid monolayer on a microscope slide with a single motion of the spreader 10 over the base. Because a new spreader is used for each coating operation, uniform fluid samples can be deposited without contamination by previously deposited samples.

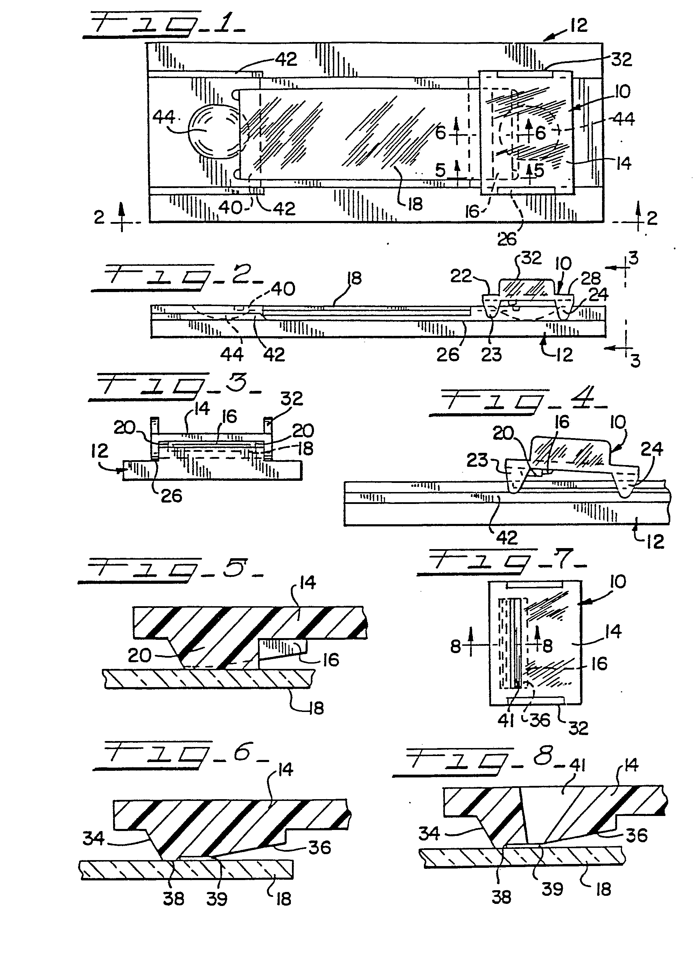

The spreader 10 in the embodiments shown in Figures 5 and 6 comprises a support 14 and a bar 16 extending transversely across the bottom of the support for uniformly smearing the fluid monolayer on the upper surface of a microscope slide 18. The spreader 10 in Figure 5 is maintained above the slide 18 by contact with the base 12 and the slide at four points. Specifically, a pressure pad 20 located at each end of the bar 16 (see Figure 3) rests on the upper surface of the slide to hold the front end 22 of the spreader at a predetermined distance above the slide, and a set of rear legs 24 rest within tracks 26 on the base to hold the rear end 28 of the spreader in position. The front legs 23 do not rest on the base, as illustrated in Figure 2, but simply serve to guide the front end 22 of the spreader and to prevent lateral movement of the spreader during the drawing motion. Handles 32 may be provided to facilitate gripping and drawing the spreader 10 over the slide 18.

The spreader 10 shown in Figure 6 is maintained above the slide 18 by contact with the base and the slide at five points. In addition to the four contact points described with reference to Figure 5, a portion of the bar 16 can rest on the upper surface of the slide to hold the front end 22 of the spreader over the slide and form the fifth contact point. The bar 16 can, of course, be slightly spaced above the slide relative to the cutaway section to render this embodiment much like that of Figure 5.

Referring to Figures 5 and 6 in greater detail, the bar 16 includes sloping anterior and posterior surfaces 34 and 36, respectively. A flat section 38 is located between the sloping surfaces. The embodiment of Figure 6 also includes a cutaway section 39. When the spreader 10 is positioned above the top surface of the slide 18, the anterior surface 34 of the bar 16 extends at an angle to the planar slide surface. In preferred embodiments, that angle is between 60° and 80° to the slide surface for the forming of whole blood films. The posterior surface 36 of the bar 16 defines an angle of approximately 10° with respect to the aforesaid planar slide surface. Variations within 60° to 80° in the anterior angle produce a uniform film of a blood sample that is satisfactory for microscopic analysis.

In addition, a variation in the anterior angle produces a change in the thickness of the film deposited by the spreader. For example, when blood is the fluid to be spread as a film, a change from 80° to 60° in the anterior angle produces a thicker film. The device, therefore, can be constructed to spread monolayered films of a predetermined thickness. It will be understood that fluids in addition to blood, such as urine or a bacteria culture medium can be uniformly deposited on slides by the present invention, assuming appropriate dimensional changes are made in both the spacing between the flat section 38 of the bar 16 and slide 18 and in the angles of the anterior and posterior surfaces 34 and 36.

When a sample of whole blood is deposited through use of the embodiment shown in Figure 5, a gap of approximately 0.05 to 0.254mm (0.002 to 0.010 inches) between the bottom of the bar 16 and the top surface of the slide has been found to produce an even distribution of blood cells. The anterior and posterior sloping surfaces 34 and 36 of the bar 16 should be sufficiently smooth to insure an even contact between the bar 16 and the fluid. An uneven contact could produce streaking of the sample and, in the case of a whole blood sample, considerable red blood cell overlapping.

Fluids can also be uniformly deposited on slides by the embodiment of Figure 6 if dimensional changes are made in both the spacing between the top of the cutaway section 39 and slide 18. For example, increasing the height of the cutaway section when spreading a red blood cell sample, decreases the space between the cells. Decreasing the height of the cutaway section, on the other hand, disperses the sample and increases the space between cells. When a sample of whole blood is deposited, a gap of approximately 0.05mm (0.002 inch) between the top of the cutaway section and the top surface of the slide has been found to produce an even distribution of blood cells. In addition, the flat section 38 and posterior sloping surface 36 of the bar 16 should be sufficiently smooth to insure an even contact between the cutaway 39 and the fluid. An uneven contact in this embodiment could also produce streaking of the sample and, in the case of a whole blood sample, considerable red blood cell overlapping. Fluids containing particulate matter or sediment may be deposited as monolayers by either embodiment once the appropriate dimensional changes are made.

Referring again to Figure 1, the base 12 securely holds within a recess 40 the slide 18 which is to be coated with the fluid. Tracks 26 on the base guide the front and rear legs 23 and 24, respectively, of the spreader 10 during the drawing motion. As best illustrated in Figure 4, a ramp 42 at the end of each track 26, when in contact with the front legs 23, lifts the spreader 10 and thus the bar 16 from the proximity of the top surface of the slide 18 at the end of the drawing motion.

In the practice of the invention, a slide 18 is placed within the recess 40 of the base 12. A drop of the fluid to be smeared is placed at one end of the top surface of the slide 18. The spreader 10 is then placed on the base 12 so that the front and rear legs 23 and 24 of the spreader ride in the tracks 26 of the base. With a single motion the spreader 10 of Figure 5 is drawn slowly over the fluid droplet and across the slide 18. The pressure pads 20, when in contact with the slide 18, maintain a fixed distance between the bar 16 and the slide surface. The flat section 38 of the bar 16 is in close proximity with the top surface of the slide 18 during the drawing motion, and consequently the fluid is spread between the flat section 38 and the slide 18.

In use, the spreader 10 of Figure 6 is pulled slowly toward the operator and over the fluid droplet with a single motion so that the fluid can diffuse by capillary action within the cutaway section of the bar. The spreader is then drawn across the slide 18. The bar 16 and pressure pads 20, when in contact with the slide 18, maintain a fixed distance between the top of the cutaway section and the slide surface so that the cutaway section 39 does not contact the slide during the drawing motion. This fixed distance minimizes the possibility of shearing and deforming the cells. In addition, the bar 16 if in contact with the slide produces drag or friction as the spreader 10 is moved over the slide to maintain the capillary action. The pressure pads 20, on the other hand, ensure a constant pressure between the spreader, the slide and the fluid within the cutaway section 39 and prevent compression of the bar during the drawing motion.

As the bar 16 reaches the end of the slide 18, the front legs 23 of the spreader 10 illustrated in both embodiments engage the ramps 42 within the tracks 26 to lift the bar from the slide 18 and to break evenly the contact between the slide 18, fluid and bar 16. (See Figure 4). Alternatively, the spreader 10 may be lifted by the operator or by other means directly from the surface of the slide. Fingerholds 44 may be provided to allow the slide to be removed easily from the base 12 without deforming the film.

The advantage of a single motion in the application of the fluid lies in the decrease in shear forces to which the fluid is subjected. While a shear force does result from the movement of the spreader 10 across the slide 18, the single pass of the spreader 10 produces less distortion of sample cells than the drawing action of one slide in contact with another, between which the fluid is sought to be dispersed. The bar 16 does not contact the slide during the drawing motion or cutaway section is provided so that a fixed distance between the bar and the slide is maintained. This fixed distance minimizes the possibility of shearing and deforming the cells as the spreader is moved over the slide.

As described, the fluid is advanced along the slide 18 during the drawing motion by the capillary action resulting from the proximity of the bar 16 to the slide. Capillary action is a force that is the resultant of the adhesion, cohesion and surface tension in a liquid which is in contact with a solid, as in a capillary tube. When the cohesive force is greater, the surface of the liquids tends to rise or advance in the tube; when the adhesive force is greater, the liquid surface tends to be depressed in the tube. The cooperation of the flat section 39 with the bar 16 and pressure pads 20 which contact the slide produces the friction or drag and the downward pressure necessary to maintain the capillary action during the drawing motion.

A third embodiment of the spreader of the invention is shown in Figures 7 and 8. A slot 41 extends through the support 14 and the midsection of the bar 16 proximate to the posterior angle 36 to join the top of the support and the top of the cutaway section 39. In addition the slot 41 has an upper width greater than its lower width to form a funnel-shaped passage for receiving fluids. (See Figure 8).

In the operation of this embodiment, a slide 18 is placed within the recess 40 of the base 12. The spreader 10 is placed on the base so that the front and rear legs 23 and 24 of the spreader ride in the tracks 26 of the base. A quantity of fluid is then placed in the slot 41 of the spreader 10. With a single motion the spreader is drawn across the slide 18, and the fluid is dispersed along the slide. As the bar 16 reaches the end of the slide 18, the front legs 23 of the spreader 10 engage the ramps 42 within the tracks 26, as previously described, to lift the bar 16 from the slide 18 and to break evenly the contact between the slide, fluid and bar. (See Figure 4).

This invention represents a sharp departure from conventional methods of forming fluid smears or films. A basic feature of the apparatus is the ability to hold and to distribute a fluid between two parallel planes as the spreader 10, which defines a first upper plane, is drawn over the slide 18 forming a second, lower plane. In particular, the upper plane of the spreader comprises the flat section 38 (Figure 5) or the top of the cutaway section 39 (Figure 6) located on the bottom of the bar. This upper plane remains equidistant and parallel to the lower plane, the surface of the slide, during the drawing motion of the spreader over the base 12.

A third plane, parallel to and below the two aforementioned planes, is defined by the tracks 26 of the base 12. The maintenance of this parallel configuration of the three planes and of a constant distance between the flat section 38 (Figure 5) or the top of the cutaway section 39 (Figure 6) and the slide 18 is critical to the forming of unstreaked films having a uniform distribution of components. During the drawing motion, the pressure pads 20 of the spreader 10 move along the surface of the slide 18 and thus ensure parallelism between the bar 16 and the slide while the rear legs 24 of the spreader move within the tracks 26 of the base 12 to ensure parallelism between the bar and the base.

In addition, the cooperation of the anterior and posterior angles (and the cutaway section) is essential to the production of the capillary action necessary for the forming of a uniform, unstreaked film. The constant anterior angle of the bar holds the fluid under a given surface area defined by the anterior sloping surface 34 and the flat section 38, while the constant posterior angle of the posterior sloping surface 36 releases the fluid at a constant rate to form the film.

The device has an additional advantage of being portable, and thus, it is capable of use at bedside in a hospital or clinic. The devices currently available for spreading monolayered blood films are too bulky for portable use. In fact, such devices seldom are removed from the laboratory. The procedure in most hospitals is to draw the blood sample from the patient, place the sample in a collection vial and take the sample to the laboratory for analysis. Use of the present device permits an immediate analysis of the blood by spreading a film at the time the blood is drawn.

This ability to spread the sample immediately after collection has several advantages. The intermediate step of placing the sample in a vial prior to the analysis may be avoided. Collection vials may contain residual amounts of complexing agents or cleaning solutions which can contaminate the sample. For example, even small quantities of a complexing agent like disodium edetate (EDTA) can remove enough metal ions, including calcium and magnesium, from a red blood cell to distort the shape of the cell. Avoidance of this storage step prior to analysis of the sample prevents this possibility of contamination.

In addition, the volume of blood needed for a microscopic analysis is decreased. Rather than drawing a volume of blood sufficient to fill the collection vial, only a droplet of blood is required. Therefore, the sample can be obtained merely by pricking the finger with a sharp instrument, placing the droplet directly on the slide and spreading immediately the droplet collected. This feature makes the device of the present invention particularly useful in pediatrics since infants have little blood to spare for frequent blood tests using a conventional method of smearing films.

It will be understood, of course, that various changes and modifications may be made in the above described apparatus without departing from the following claims.

**Claims:**

1. A spreader (10) for forming a single-cell-layered film on a microscope slide (18) from a fluid placed on the slide, and slide being held by a supporting base surface (12), characterized in that said spreader comprises:
(a) a support (14) having an upper surface and a lower surface;
(b) a bar (16) extending in a direction transverse to the slide and downwardly along said lower surface of said support, having a first sloped anterior surface (34), a second sloped posterior surface (36) and flat section (38) interposed between the lower ends of said first and second sloped surfaces (34, 36) said sloped surfaces extending upwardly toward the lower surface of said support from said flat section (38), said first section and sloped surfaces extending in said transverse direction; and
(c) means (20) extending downwardly from said lower surface of said support (14) along either end of said bar (16) and slightly below said bar to engage said slide (18) and to slightly space the flat section (38) of said bar parallel to the slide on which the monolayered film is to be formed.

2. A spreader as set forth in claim 1 wherein said support (14) comprises a planar surface and said bar (16) is secured to the lower surface thereof.

3. A spreader as set forth in claim 1 or 2 wherein said means extending downwardly from said lower surface of said support comprises pads (20) mounted on either end of said bar (16) and slightly below said bar to engage said slide (18) and to slightly space the flat section of said bar parallel to the slide on which the monolayered film is to be formed.

4. A spreader as set forth in claim 3 further including means extending downwardly from said support (14) having legs (24) on either side of said support for engaging a supporting surface (12) when the slide is engaged by the pads (20).

5. A spreader as set forth in claim 3 or 4 wherein said pads (20) hold said support (14) above the slide (18) with said bar (16) in close proximity to the slide whereby as the spreader is moved over the slide having a fluid thereon, a fluid sample contacts said flat section (38) of said bar and the fluid sample is spread by capillary action across the slide to form a film.

6. A spreader as set forth in claim 1 including at least one handle (32) on the upper surface of said support (14) for gripping the spreader.

7. A spreader as set forth in any one of claims 1 to 6, wherein a cutaway section (39) is provided adjacent to said end of said second sloped surface (36) such that said cutaway section is in close proximity with the slide on which the film is to be formed, and the means (20) extend downward from either side of said cutaway section whereby as the spreader is placed over a droplet of fluid on the slide, the fluid can diffuse between the cutaway section and the slide so that the film can be formed as the spreader is drawn over the slide.

8. A spreader as set forth in claim 7 wherein said bar (16) includes a slot (41) extending transversely and through said bar (16) for receiving the fluid to be spread whereby as the spreader is drawn over the slide the fluid flows by capillary action from the slot to the cutaway section and is deposited across the slide.

9. A spreader as set forth in claim 7 or 8 wherein said means extending downward from either side of said cutaway section comprises pads (20) mounted on each side of said bar and slightly below said cutaway section to engage the slide and to slightly space the top of said cutaway section from the slide on which the monolayered film is to be formed.

10. A spreader as set forth in any one of claims 1 to 9 in combination with a supporting base surface (12) wherein said supporting surface that is engaged by said means (20) extending downward from said support (14) includes a recess (40) for holding the slide (18) stationary as the spreader (10) is moved over the slide to form the film.

11. A spreader as set forth in claim 10 wherein said supporting surface (12) includes at least two tracks (26) for guiding said legs (24) and preventing lateral movement of the spreader (10) as the spreader is moved over the slide whereby a uniform, unstreaked film is formed.

12. A spreader as set forth in claim 11 wherein each of said tracks (26) includes an elevated ramp section (42) at one end thereof for receiving said legs to lift the spreader from the supporting surface (12) whereby the bar (16) is disengaged evenly from contact with the film.

**Patentansprüche**

1. Spreizer (10) zur Bildung eines Einzellenschicht-Filmes auf einem Mikroskop-Objektträger (18) aus einem auf den Objektträger gebrachten Fluid, wobei der Objektträger von einer Halterungsbasisoberfläche (12) gehalten wird, dadurch gekennzeichnet, daß der Spreizer enthält:

(a) eine Halterung (14) mit einer oberen Oberfläche und einer unteren Oberfläche;

(b) eine sich in einer Richtung quer zu dem Objektträger und längs der unteren Oberfläche der Halterung abwärts erstreckende Stange (16) mit einer ersten abgeschrägten Vorderoberfläche (34), einer zweiten abgeschrägten Hinteroberfläche (36) und einem zwischen den unteren Enden der ersten und zweiten abgeschrägten Oberflächen (34, 36) zwischengesetzten flachen Abschnitt (38), wobei die abgeschrägten Oberflächen sich nach oben in Richtung auf die untere Oberfläche der Halterung von dem flachen Abschnitt (38) erstrecken und der flache Abschnitt und die abgeschrägten Oberflächen sich in der Querrichtung erstrecken; und

(c) eine sich nach unten von der unteren Oberfläche der Halterung (14) längs jedes Endes der Stange (16) und leicht unterhalb die Stange erstreckende Einrichtung (20) zum Angriff an dem Objektträger (18) und zur Beabstandung des flachen Abschnittes (38) der Stange in geringem Abstand parallel zu dem Objektträger, auf dem der Einzellenschicht-Film gebildet werden soll.

2. Spreizer nach Anspruch 1, worin die Halterung (14) eine ebene Oberfläche enthält und die Stange (16) an deren unterer Oberfläche befestigt ist.

3. Spreizer nach Anspruch 1 oder 2, worin die sich von der unteren Oberfläche der Halterung nach unten erstreckende Einrichtung Kissen (20) aufweist, die an jedem Ende der Stange (16) und leicht unterhalb der Stange zum Angriff an dem Objektträger (18) und zur Beabstandung des flachen Abschnitts der Stange in geringem Abstand parallel zu dem Objektträger, auf dem der Einzellenschicht-Film gebildet werden soll, befestigt sind.

4. Spreizer nach Anspruch 3, weiterhin enthaltend eine sich von der Halterung (14) nach unten erstreckende Einrichtung mit Beinen (24) auf jeder Seite der Halterung zum Angriff an einer Halterungsoberfläche (12), wenn der Objektträger in Eingriff mit den Kissen (20) steht.

5. Spreizer nach Anspruch 3 oder 4, worin die Kissen (20) die Halterung (14) oberhalb des Objektträgers (18) mit der Stange (16) in dichter Nähe zu dem Objektträger halten, wobei bei Bewegung des Spreizers über den ein Fluid aufweisenden Objektträger eine Fluidprobe den flachen Abschnitt (38) der Stange berührt und die Fluidprobe durch Kapillarwirkung über den Objektträger zur Bildung eines Filmes ausgespreizt wird.

6. Spreizer nach Anspruch 1, enthaltend mindestens einen Handgriff (32) an der oberen Oberfläche der Halterung (14) zum Angreifen an dem Spreizer.

7. Spreizer nach einem der Ansprüche 1 bis 6, worin benachbart zu dem Ende der zweiten abgeschrägten Oberfläche (36) ein ausgeschnittener Abschnitt (39) vorgesehen ist, so daß der ausgeschnittene Abschnitt in enger Nähe mit dem Objektträger, auf dem der Film geformt werden soll, ist, und die Einrichtung (20) sich nach unten von jeder Seite des ausgeschnittenen Abschnittes erstreckt, wodurch, wenn der Spreizer über ein Fluidtröpfchen auf dem Objektträger gelegt wird, das Fluid zwischen dem ausgeschnittenen Abschnitt und dem Objektträger ausweichen kann, so daß der Film gebildet werden kann, wenn der Spreizer über den Objektträger gezogen wird.

8. Spreizer nach Anspruch 7, worin die Stange (16) einen sich quer und durch die Stange (16) erstreckenden Schlitz (41) zur Aufnahme des auszuspreizenden Fluids enthält, wodurch, wenn der Spreizer über den Objektträger gezogen wird, das Fluid durch Kapillarwirkung von dem Schlitz zu dem ausgeschnittenen Abschnitt strömt und über den Objektträger abgelagert wird.

9. Spreizer nach Anspruch 7 oder 8, worin die sich von jeder Seite des ausgeschnittenen Abschnittes nach unten erstreckende Einrichtung Kissen (20) aufweist, die auf jeder Seite der Stange und leicht unterhalb des abgeschnittenen Abschnittes befestigt sind, um in Eingriff mit dem Objektträger zu stehen und die Oberseite des ausgeschnittenen Abschnittes in engem Abstand von dem Objektträger zu halten, auf dem der Einzellenschicht-Film gebildet werden soll.

10. Spreizer nach einem der Ansprüche 1 bis 9 in Kombination mit einer Halterungsbasisoberfläche (12), worin die mit der sich von der Halterung (14) nach unten erstreckenden Einrichtung (20) in Eingriff stehende Halterungsoberfläche eine Ausnehmung (40) zum Stationärhalten des Objektträgers (18) enthält, wenn der Spreizer (10) über den Objektträger zur Bildung des Filmes bewegt wird.

11. Spreizer nach Anspruch 10, worin die Halterungsoberfläche (12) mindestens zwei Bahnen (26) zum Führen der Beine (24) und zur Verhinderung der seitlichen Bewegung des Spreizers (10) enthält, wenn der Spreizer über den Objektträger bewegt wird, wodurch ein gleichförmiger nicht geaderter Film gebildet wird.

12. Spreizer nach Anspruch 11, worin jede der Bahnen (26) einen erhöhten Rampenabschnitt (42) an ihrem einen Ende zur Aufnahme der Beine zum Anheben des Spreizers von der Halterungsoberfläche (12) aufweist, wodurch die Stange (16) gleichmäßig außer Kontakt mit dem Film gebracht wird.

**Revendications**

1. Appareil (10) pour appliquer des mono-couches par étalement sur un porte-objet (18) de microscope à partir d'un fluide placé sur le porte-objet, ce dernier étant maintenu en place par une surface de support (12) inférieure, caractérisé en ce que le dispositif d'étalement comprend:

(a) un support (14) ayant une face supérieure et une face inférieure;

(b) une barre (16) s'étendant transversalement par rapport au support et vers le bas suivant la face inférieure du support, comportant une première surface inclinée antérieure (34), une seconde surface inclinée postérieure (36) et une partie horizontale (38) intercalée entre les extrémités inférieures des première et seconde surfaces inclinées (34, 36), ces surfaces inclinées s'étendant à partir de la partie horizontale (38) en montant vers la face inférieure du support, la partie horizontale et les surfaces inclinées s'étendant transversalement comme indiqué ci-dessus; et

(c) des moyens (20) s'étendant à partir de la face inférieure du support (14) vers le bas le long de chaque extrémité de la barre (16) et légèrement au-dessous de cette barre de façon à venir en contact avec le porte-objet (18) et pour écarter la partie horizontale (38) de la barre, légèrement et parallèlement vis-à-vis du porte-objet lequel la monocouche doit être formée.

2. Appareil selon la revendication 1, caractérisé en ce que le support (14) comporte une surface plane et la barre (16) est fixée sur la partie inférieure de cette surface.

3. Appareil selon la revendication 1 ou 2 dans lequel les moyens s'étendant à partir de la face inférieure du support comprenant des patins (20) montés sur les extrémités de la barre (16) et légèrement au-dessous de cette barre de manière à venir en contact avec le porte-objet (18) et pour écarter la partie horizontale de la barre légèrement et parallèlement vis-à-vis du porte-objet sur lequel la monocouche doit être formée.

4. Appareil selon la revendication 3 comportant également des moyens s'étendant vers le bas à partir du support (14), équipés de pieds (24) de chaque côté de ce support venant en contact avec la surface de support (12) lorsque le porte-objet est en contact avec les patins (20).

5. Appareil selon revendications 3 ou 4 dans lequel les patins (20) maintiennent le support (14) au-dessus du porte-objet (18), la barre (16) se trouvant très proche du porte-objet, ce qui a pour effet que, lorsque l'appareil est déplacé sur le porte-objet sur lequel il se trouve un fluide, une partie de ce liquide entre en contact avec la partie horizontale (38) de la barre et la partie du liquide est étalée par l'activité capillaire sur toute la largeur du porte-objet et forme une couche.

6. Appareil selon la revendication 1, comportant au moins une manette (32) sur la face supérieure du support (14) permettant de tenir l'appareil.

7. Appareil selon l'une quelconque des revendications 1 à 6 dans lequel est prévue une partie évidée (39) adjacente à l'extrémité de la seconde surface inclinée (36) se sorte que la partie évidée soit trés proche du porte-objet sur lequel la couche doit être formée, et les moyens (20) s'étendent vers le bas de chaque côté de la partie évidée, ce qui a pour effet que, lorsque l'appareil est placé au-dessus d'une gouttelette de fluide sur le porte-objet, ce fluide peut se répandre entre la partie évidée et le porte-objet de sorte que la couche se forme en déplaçant l'appareil sur le porte-objet.

8. Appareil selon la revendication 7, dans lequel la barre (16) comporte une rainure (41) s'étendant de façon transversale et à travers la barre (16) afin de recueillir le fluide à étaler, c'est-à-dire que lorsque l'appareil est déplacé sur le porte-objet, le fluide s'écoule par activité capillaire de la rainure vers section évidée et est dèposé sur toute la largeur du porte-objet.

9. Appareil selon la revendication 7 ou 8 dans lequel les moyens s'étendant vers le bas de chaque côté de la partie évidée comportent des patins (20) montés sur les deux côtes de la barre et légèrement au-dessous de la partie évidée pour venir en contact avec le porte-objet et pour écarter légèrement le sommet de la partie évidée du porte-objet sur lequel la monocouche doit être formée.

10. Appareil selon l'une quelconque des revendications 1 à 9, combiné avec une surface de support inférieure (12), dans lequel la surface de support sur lequel reposent les moyens (20) s'étendant vers le bas à partir du support (14) comporte une encoche (40) pour immobiliser le porte-objet (18) lorsque l'appareil (10) est déplacé sur le porte-objet pour former la couche.

11. Appareil selon la revendication 10 dans lequel la surface de support (12) comporte au moins deux glissières (26) pour guider les pieds (24) et pour empêcher tout mouvement latéral de l'appareil (10) lorsque l'appareil est déplacé sur le porte-objet formant une couche uniforme sans bandes.

12. Appareil selon la revendication 11 dans laquelle chacune des glissières (26) comporte une rampe surélevée (42) à l'une de ses extrémités, destinée à recevoir les pieds pour soulever l'appareil de la surface de support (12), ce qui a pour effet de mettre la barre (16) hors contact de la couche de façon égale en tous points.

Fig. 1

Fig. 2

Fig. 3

Fig. 4

Fig. 5

Fig. 7

Fig. 6

Fig. 8